# EUROPÄISCHE PATENTSCHRIFT

(11) **EP 2 016 293 B1**
(45) Veröffentlichungstag und Bekanntmachung des Hinweises auf die Patenterteilung: **24.03.2010**
(21) Anmeldenummer: 07724030.7
(22) Anmeldetag: 05.04.2007
(51) Int. Cl.: F16B 5/06

(54) **DREHVERSCHLUSS**
TURNLOCK FASTENER
VERROU TOURNANT

(30) Priorität: 04.05.2006 DE 102006020697
(43) Veröffentlichungstag der Anmeldung: 21.01.2009
(73) Patentinhaber: A. Raymond et Cie., 38000 Grenoble (FR)
(72) Erfinder: SILBEREISEN, Friedrich, 79588 Efringen-Kirchen (DE); VOLLMER, Jürgen, 79426 Buggingen (DE)
(74) Vertreter: Rüttgers, Joachim
(86) Internationale Anmeldenummer: PCT/EP2007/003089
(87) Internationale Veröffentlichungsnummer: WO 2007/128375

(56) Entgegenhaltungen:
- WO-A-2007/065520
- DE-A1- 19 838 560
- US-A- 4 762 437
- US-B1- 6 237 970

## Beschreibung

Die Erfindung betrifft einen Drehverschluss gemäß dem Oberbegriff des Patentanspruches 1.

Ein derartiger Drehverschluss ist in US-A-4,762,437 offenbart. Dieser Drehverschluss dient zum Verbinden von zwei Bauteilen. Der vorbekannte Drehverschluss verfügt über eine Deckplatte sowie über einen an der Deckplatte angeformten und sich von der Deckplatte weg erstreckenden Fußschaft. An den Fußschaft sind in einem Abstand von der Deckplatte zwei einander gegenüberliegende und sich von dem Fußschaft radial nach außen erstreckende starre Fixiersockel angesetzt. Weiterhin ist eine Fixieranordnung zum Fixieren des Drehverschlusses an einem ersten Bauteil vorhanden, wobei die Fixieranordnung wenigstens zwei radial federnde Federschenkel aufweist, die in Umfangsrichtung jeweils zwischen zwei Fixiersockeln angeordnet sowie mit einem Ende mit dem Fußschaft verbunden sind und sich mit dem anderen freien Ende von dem Fußschaft weg in Richtung der Deckplatte erstrecken. Bei dem vorbekannten Drehverschluss sind die starren Fixiersockel näher als sie die Federschenkel an der Deckplatte angeordnet und weisen in radialer Richtung eine deutlich geringere Erstreckung auf als die Federschenkel in relaxierter Anordnung.

Zum Einnehmen einer an einem ersten Bauteil gehaltenen Vorfixieranordnung treten die Federschenkel durch eine in dem ersten Bauteil ausgebildete Einfügeausnehmung unter radialem Einfedern nach innen hindurch, während die starren Fixiersockel mit einem gewissen Kraftaufwand unter Ausnutzen der Eigenelastizität der Materialien des Drehverschlusses sowie des ersten Bauteiles durch die Einfügeausnehmung hindurchgedrückt werden. In dieser Vorfixieranordnung wird dann zum Einnehmen einer Endfixieranordnung das erste Bauteil mit dem vorfixierten Drehverschluss auf ein zweites Bauteil gelegt, und die Federschenkel werden durch eine in dem zweiten Bauteil ausgebildete Durchsteckausnehmung gedrückt, um das zweite Bauteil zum Herstellen der Verbindung mit dem ersten Bauteil zu hintergreifen.

Aus US 6,237,970 B1 ist ein weiterer Drehverschluss bekannt, der eine Deckplatte und einen an der Deckplatte angeformten sowie sich von der Deckplatte weg erstreckenden Fußschaft aufweist. An dem der Deckplatte abgewandten Ende des Fußschaftes sind zwei einander gegenüberliegende starre Fixiersockel ausgebildet. In axialer Richtung zwischen den Fixiersockeln und der Deckplatte sind in radialer Richtung federnd ausgebildeten Federschenkel angeordnet, die zum Hintergreifen eines ersten Bauteiles dienen, in dessen Einfügeausnehmung der Drehverschluss in einer Vorfixieranordnung unter Einfedern der Federschenkel eingeschoben worden ist. Zum Verbinden des ersten Bauteiles mit einem zweiten Bauteil werden die Fixiersockel in eine in dem zweiten Bauteil ausgebildete Durchsteckausnehmung hindurchgeführt, und der Drehverschluss wird anschließend gedreht.

Aus DE 198 38 560 A1 ist ein Drehverschluss zum Verbinden von zwei Bauteilen bekannt, das über eine Deckplatte und über ein an der Deckplatte angeformtes Fußteil verfügt. Das Fußteil weist einen sich von der Deckplatte weg erstreckenden Fußschaft auf, an dem in einem Abstand von der Deckplatte zwei einander gegenüberliegende und sich von dem Fußschaft radial nach außen erstreckende starre Fixierarme angesetzt sind. Weiterhin ist eine Vorfixieranordnung vorhanden, um den Drehverschluss an einem Bauteil vorzufixieren. Bei diesem vorbekannten Drehverschluss ist Vorfixieranordnung durch radial über den Fußschaft vorstehenden Nocken gebildet. Diese Nocken sind dazu eingerichtet, in halbseitig offene, sacklochartige Ausnehmungen einzugreifen, die entlang einer Umrandung einer in einem Bauteil eingebrachten Einfügeausnehmung eingebracht sind, in dem der Drehverschluss vorzufixieren ist. Nachteilig bei dieser Ausgestaltung ist jedoch, dass die Vorfixieranordnung und die Einfügeausnehmung sehr genau aufeinander angepasst sein müssen, damit der Eingriff erfolgt. Weiterhin ist mit dieser Ausgestaltung die Auszugskraft des Drehverschlusses in der Vorfixieranordnung für einige Anwendungsfälle unzureichend.

Die nachveröffentlichte WO 2007/065520 A1 offenbart einen Drehverschluss zum Verbinden einer ersten Platte auf einer zweiten Platte. Dieser Drehverschluss verfügt über einen länglichen Körper, der einen Fuß und einen Kopf mit Rückhaltemitteln für die zweite Platte aufweist. Jede Platte ist mit einer Ausnehmung ausgebildet, durch die der längliche Körper in axialer Richtung durchtritt und mit unter Drehung betätigten Verriegelungsmitteln gehalten ist. Der Drehverschluss verfügt über Mittel zum Befestigen des Fußes an der ersten Platte sowie über Klemmmittel zum automatischen Annähern der ersten Platte und der zweiten Platte, wenn der Drehverschluss durch Drehen des länglichen Körpers verriegelt wird.

Der Erfindung liegt die Aufgabe zugrunde, einen Drehverschluss der eingangs genannten Art anzugeben, der bei einer verhältnismäßig einfachen Montage eine gute Dichtwirkung gegenüber den zu verbindenden Bauteilen erzielt.

Diese Aufgabe wird bei einem Drehverschluss der eingangs genannten Art erfindungsgemäß mit den kennzeichnenden Merkmalen des Patentanspruches 1 gelöst.

Dadurch, dass bei dem erfindungsgemäßen Drehverschluss die federnd ausgebildeten Federschenkel die Fixierung in der Vorfixieranordnung sicherstellen, ist die Vorfixieranordnung mit einem verhältnismäßig geringen Kraftaufwand einnehmbar. Durch das Ausbilden der Fixiersockel jeweils mit einer Anfahrschräge ergibt sich ein Verspannen des Drehverschlusses mit den Bauteilen, wobei durch die erfindungsgemäße Beabstandung der Stirnflächen der Fixiersockel von den Stimseiten der an der Deckplatte angeformten weichelastischen Dichtlippe sich diese unter Erzielen einer guten Dichtwirkung verformt.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: zeigt in einer perspektivischen Ansicht ein Ausführungsbei- spiel eines erfindungsgemäßen Drehverschlusses,
- Fig. 2: zeigt in einer perspektivischen Ansicht das Ausführungs- beispiel gemäß Fig. 1 im Eingriff mit einem ersten Bauteil in einer Vorfixierstellung,
- Fig. 3: zeigt in einem Querschnitt das Ausführungsbeispiel gemäß Fig. 1 und Fig. 2 in der Vorfixieranordnung gemäß Fig. 2,
- Fig. 4: zeigt in einem Längsschnitt das Ausführungsbeispiel ge- mäß Fig. 1 bis Fig. 3 in der Vorfixieranordnung,
- Fig. 5: zeigt in einer perspektivischen Ansicht das Ausführungs- beispiel gemäß Fig. 1 bis Fig. 4 in einer Endfixieranord- nung, in der zwei Bauteile miteinander verbunden sind,
- Fig. 6: zeigt in einem Querschnitt das Ausführungsbeispiel gemäß Fig. 1 bis Fig. 5 in der Endfixieranordnung gemäß Fig. 5 und
- Fig. 7: zeigt in einem Längsschnitt das Ausführungsbeispiel ge- mäß Fig. 1 bis Fig. 6 in der Endfixieranordnung gemäß Fig. 5 und Fig. 6

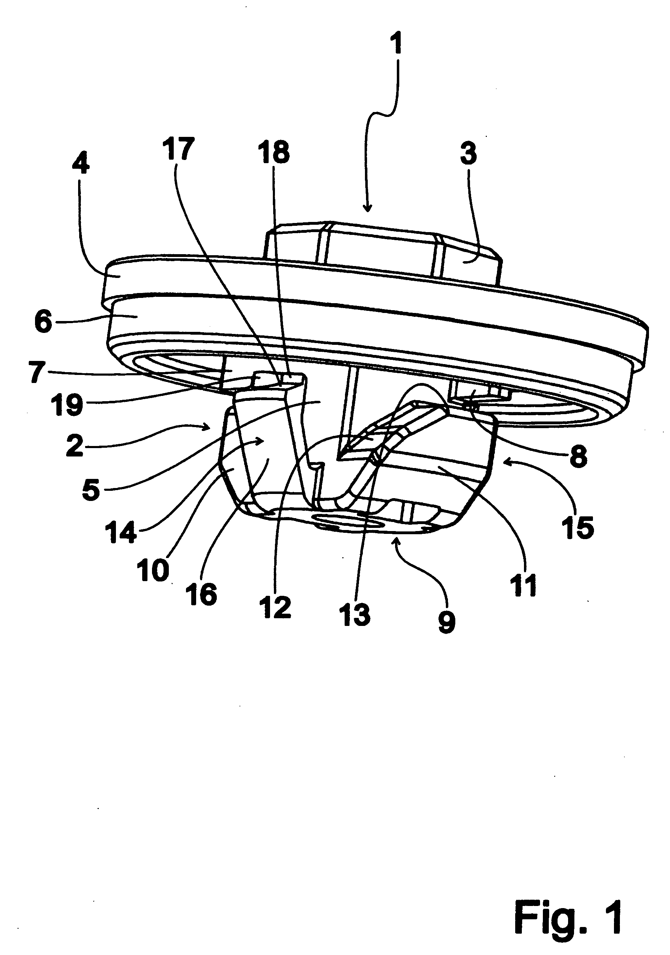

Fig. 1 zeigt in einer perspektivischen Ansicht ein Ausführungsbeispiel eines erfindungsgemäßen Drehverschlusses 1. Der beispielhafte Drehverschluss 1 verfügt über einen Grundkörper 2 aus einem hartelastischen Kunststoffmaterial, der bei diesem Ausführungsbeispiel als Werkzeugansatzstruktur über einen Sechskantkopf 3, einer mit dem Sechskantkopf 3 verbundenen sowie radial über diesen hinausragende scheibenartige Deckplatte 4 und einen auf der dem Sechskantkopf 3 gegenüberliegenden Seite der Deckplatte 4 angeformten, sich in axialer Richtung von der Deckplatte 4 weg erstreckenden Fußschaft 5 verfügt.

Weiterhin ist der Drehverschluss 1 mit einer entlang des äußeren Randes der Deckplatte 4 auf der Seite des Fußschaftes 5 angeordneten Dichtlippe 6 aus einem weichelastischen Material ausgestattet, die mit der Deckplatte 4 verbunden ist.

Im Ansatzbereich des Fußschaftes 5 an die Deckplatte 4 sind beidseitig des Fußschaftes 5 angeordnete, sich radial von dem Fußschaft 5 weg erstreckende längliche Anschlagstege 7, 8 ausgebildet. An dem der Deckplatte 4 abgewandten Fußende 9 des Fußschaftes 5 sind zum Einen beidseitig des Fußschaftes 5 angeordnete, einander gegenüberliegende massive Fixiersockel 10, 11 angeformt, die radial über den Fußschaft 5 überstehen und jeweils einen einer Drehrichtung des Drehverschlusses 1 vorderseitig liegende Anfahrschräge 12 aufweisen, die von dem dem Fußende 9 zugewandten Bereich des jeweiligen Fixiersockels 10, 11 in Richtung der Deckplatte 4 ansteigt. Jede Anfahrschräge 12 geht in eine rechtwinklig zu dem Fußschaft 5 und parallel zu der Deckplatte 4 ausgerichtete Anlageseite 13 über.

Schließlich verfügt der Grundkörper 2 über zwei Federschenkel 14, 15, die jeweils zwischen den Fixiersockeln 10, 11 angeordnet und im Bereich des Fußendes 9 mit dem Fußschaft 5 verbunden sind. Die Federschenkel 14, 15 weisen jeweils einen blattfederartigen Mittenabschnitt 16 auf, der sich von dem Fußende 9 mit zunehmendem Abstand schräg angestellt in Richtung der Deckplatte 4 erstreckt und somit jedem Federschenkel 14, 15 eine gewisse Elastizität in dem Sinne verleiht, dass die Federschenkel 14, 15 in radialer Richtung des Fußschaftes 5 beziehungsweise von diesem weg beweglich sind. An dem dem Fußende 9 gegenüberliegenden freien Ende jedes Federschenkels 14, 15 ist eine schräg nach außen weisende Stirnfläche 17 sowie ein sich axial erstreckender Abschlusssteg 18 ausgebildet. Weiterhin verfügt jeder Federschenkel 14, 15 über eine Sicherungsnase 19, die in etwa mittig auf der Stirnfläche 17 aufsitzt und sich von dem Abschlusssteg 18 radial nach außen erstreckt.

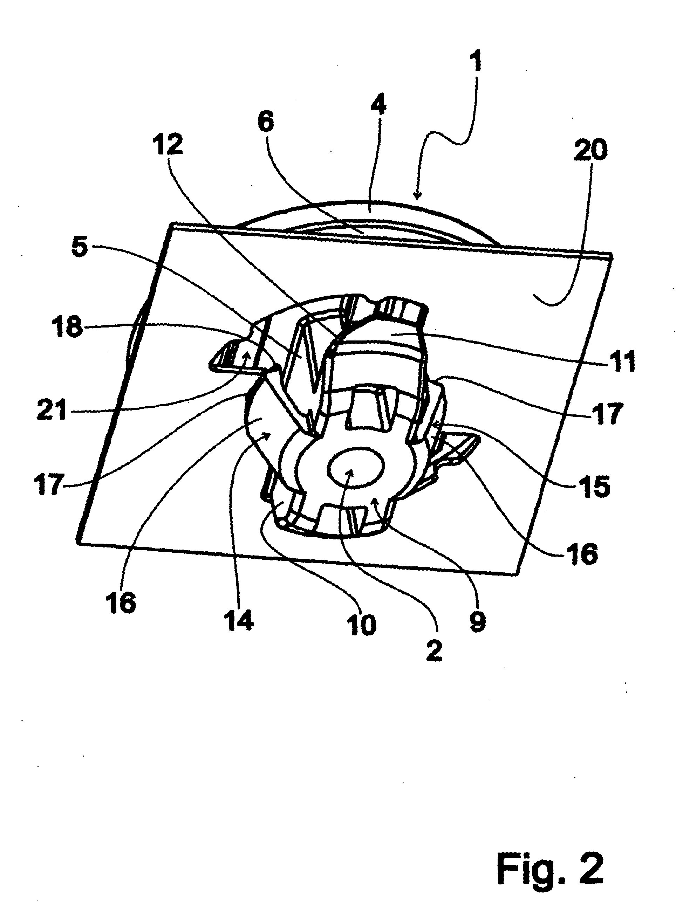

Fig. 2 zeigt in einer perspektivischen Ansicht den beispielhaften Drehverschluss 1 gemäß Fig. 1 in einer Vorfixieranordnung, in der er mit einem ersten Bauteil 20 in Eingriff ist. Das erste Bauteil 20 ist mit einer Einfügeausnehmung 21 ausgebildet, die so dimensioniert ist, dass in einer Vorfixierstellung des Drehverschlusses 1 relativ zu dem ersten Bauteil 20 ein behinderungsfreier Durchtritt der Fixiersockel 10, 11 und ein Durchtritt der Federschenkel 14, 15 unter radialem Einfedern des Mittenabschnittes 16 der Federschenkel 14, 15 in Richtung des Fußschaftes 5 mit einem anschließenden radialen Ausfedern der Federschenkel 14, 15 von dem Fußschaft 5 weg geschaffen ist. Dabei ist die Einfügeausnehmung 21 weiterhin so dimensioniert, dass die Stirnflächen 17 an der der Deckplatte 4 gegenüberliegenden Seite des ersten Bauteils 20 und die Abschlussstege 18 an dem innenseitigen Rand der Einfügeausnehmung 21 anliegen. Dadurch ist der Drehverschluss 1 in der Vorfixieranordnung mit dem ersten Bauteil 20 verankert und kann auch verhältnismäßig hohen Auszugskräften widerstehen.

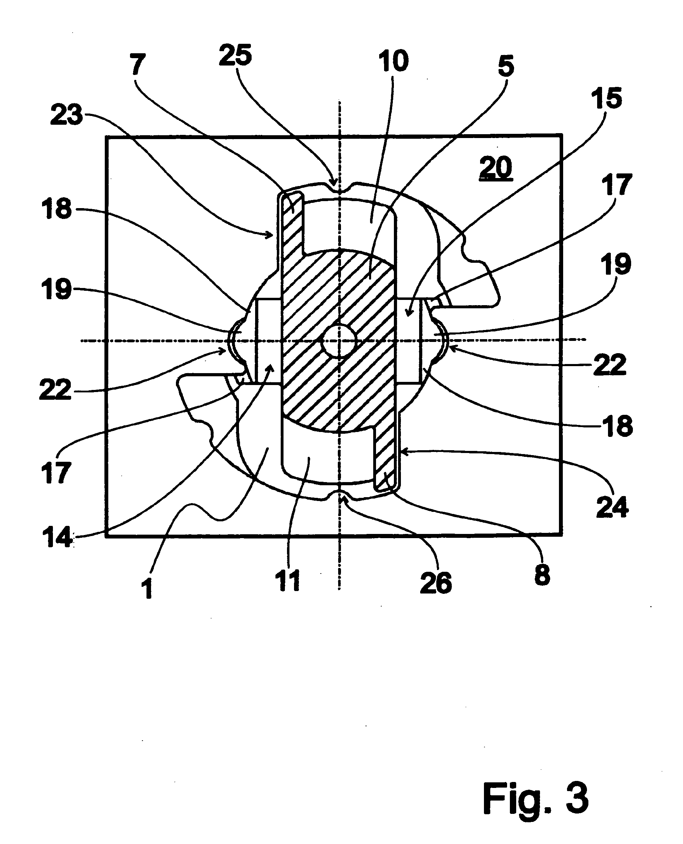

Fig. 3 zeigt in einem Querschnitt den Drehverschluss 1 gemäß Fig. 1 und Fig. 2 in der Vorfixieranordnung mit Schnitt im Bereich der Anschlagstege 7, 8. Aus Fig. 3 ist ersichtlich, dass in der Vorfixieranordnung die Sicherungsnasen 19 der Federschenkel 14, 15 in komplementär zu ihnen ausgebildete, an dem Rand der Einführausnehmung 21 ausgebildete Sicherungsausnehmungen 22 eingreifen und somit den Drehverschluss 1 bis zu einer gewissen Ausdrehkraft in der Vorfixieranordnung sichern. Weiterhin lässt sich Fig. 3 entnehmen, dass die Anschlagstege 7, 8 jeweils nahe eines ersten Anschlagbereiches 23, 24 angeordnet sind, so dass der Drehverschluss 1 gegen eine Drehung in Richtung der ersten Anschlagbereiche 23, 24 blockiert ist.

Um ergänzend zu dem Eingriff der Sicherungsnasen 19 und der Sicherungsausnehmungen 22 eine Sicherung des Drehverschlusses 1 gegen ein unbeabsichtigtes Herausdrehen aus der Vorfixieranordnung zu schaffen, sind an dem Rand der Einfügeausnehmung 21 erste Sicherungsnocken 25, 26 ausgebildet, die radial nach innen vorstehen und deren aufeinander zu weisende, radial innenseitig liegende Stimseiten einen kleineren Abstand voneinander aufweisen als der Abstand zwischen den radial nach außen weisenden Stimseiten der Anschlagstege 7, 8.

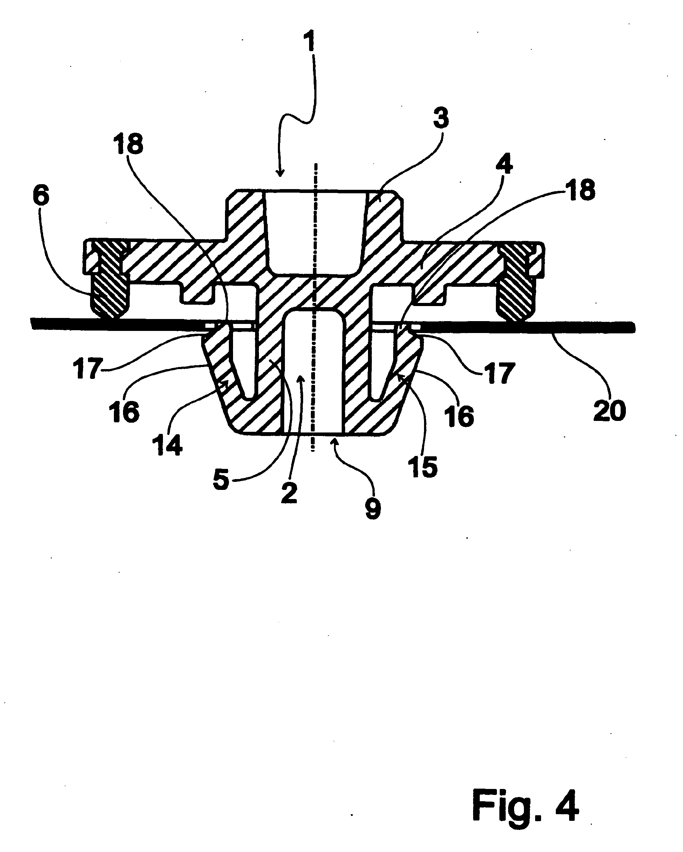

Fig. 4 zeigt in einem Längsschnitt den erfindungsgemäßen Drehverschluss 1 gemäß Fig. 1 bis Fig. 3 in der Vorfixieranordnung gemäß Fig. 2 und Fig. 3. Aus Fig. 4 ist ersichtlich, dass in der Vorfixieranordnung die Dichtlippe 6 im Wesentlichen verformungsfrei beziehungsweise allenfalls geringfügig verformt an dem ersten Bauteil 20 anliegt. Weiterhin ist aus Fig. 4 deutlich erkennbar, dass die Federschenkel 14, 15 in der Vorfixieranordnung das erste Bauteil 20 entlang des Randes der Einfügeausnehmung 21 abschnittsweise hintergreifen.

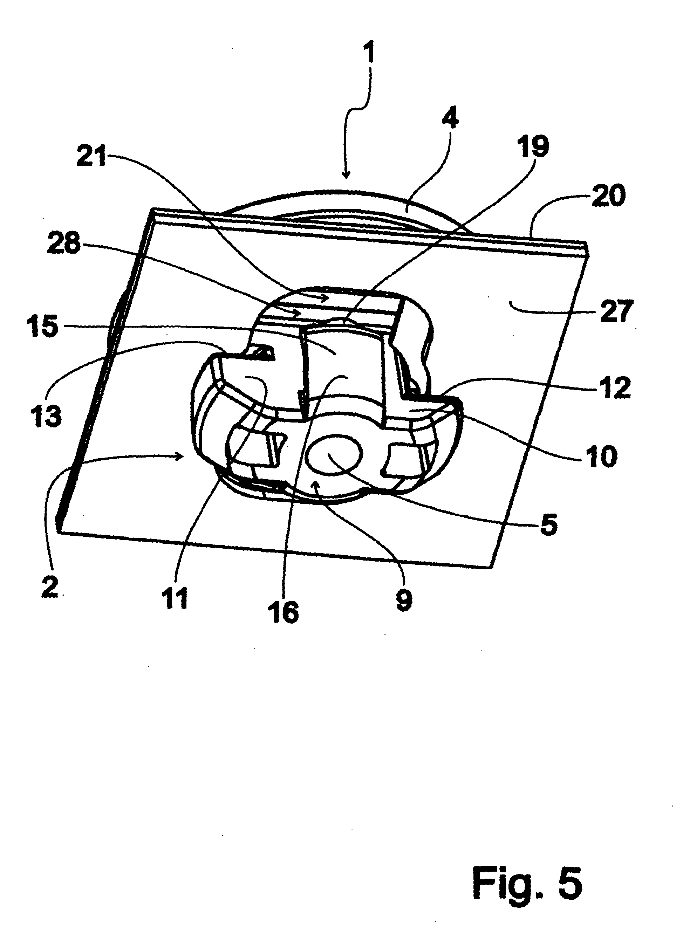

Fig. 5 zeigt in einer perspektivischen Ansicht das Ausführungsbeispiel gemäß Fig. 1 in einer Endfixieranordnung, in der das erste Bauteil 20 mit einem zweiten Bauteil 27 dadurch verbunden worden ist, dass der Drehverschluss 1 von der in Fig. 2 bis Fig. 4 dargestellten Vorfixieranordnung um typischerweise 90 Grad in einer Drehrichtung gedreht worden ist, in der die Anfahrschrägen 12 auf einen Rand einer in dem zweiten Bauteil 27 eingebrachten Durchsteckausnehmung 28 auffahren und die Anlageseiten 13 schließlich an der der Deckplatte 4 abgewandten Seite des zweiten Bauteiles 27 anliegen. In der Endfixieranordnung liegen die Federschenkel 14, 15 eingriffsfrei in einem zum behinderungsfreien Durchtritt der Fixiersockel 10, 11 ausgebildeten Bereich der Durchsteckausnehmung 28 sowie der Einfügeausnehmung 21, so dass die Verbindungsfunktion zum Verbinden der Bauteile 20, 27 allein durch das Einwirken der Fixiersockel 10, 11 bewerkstelligt ist.

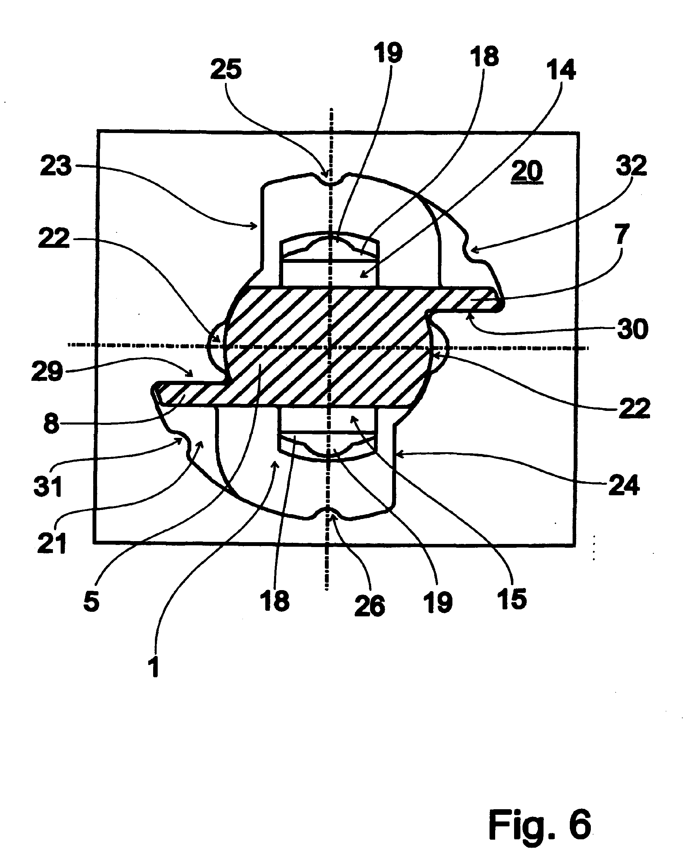

Fig. 6 zeigt den Drehverschluss 1 im Querschnitt im Bereich der Anschlagstege 7, 8. Aus Fig. 6 ist ersichtlich, dass in der Endfixieranordnung die Anschlagstege 8, 9 an zweiten Anschlagbereichen 29, 30 der Einfügeausnehmung 21 anliegen, so dass eine weitere Drehung des Drehverschlusses 1 in der Drehrichtung zum Überführen des Drehverschlusses 1 von der Vorfixieranordnung in die Endfixieranordnung blockiert ist. Um ein unbeabsichtigtes Herausdrehen des Drehverschlusses 1 entgegen dieser Drehrichtung aus der Endfixieranordnung gemäß Fig. 5 und Fig. 6 zu verhindern, sind entlang des Randes der Einfügeausnehmung 21 in einem gewissen Abstand von den zweiten Anschlagsbereichen 29, 30 zweite Sicherungsnocken 31, 32 ausgebildet, die radial nach innen in die Einfügeausnehmung 21 vorstehen. Der Abstand zwischen den radial nach innen weisenden Stimseiten der zweiten Sicherungsnocken 31, 32 entspricht dem Abstand der radial nach innen weisenden Stimseiten der ersten Sicherungsnocken 25, 26.

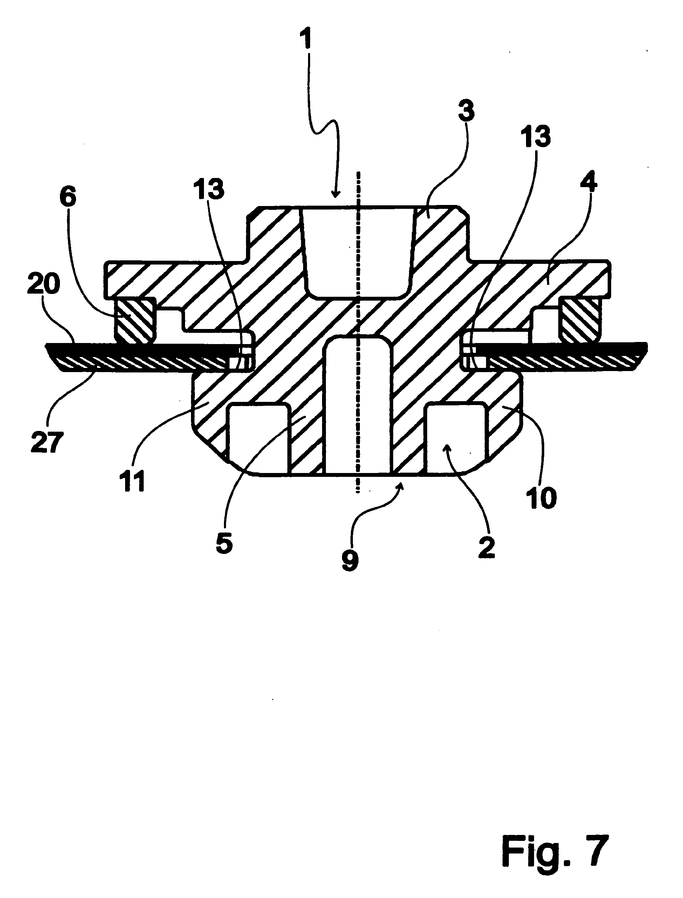

Fig. 7 zeigt in einem Längsschnitt den Drehverschluss 1 in der Endfixieranordnung gemäß Fig. 5 und Fig. 6. Aus Fig. 7 ist erkennbar, dass aufgrund der Einwirkung der Anlageseiten 13 der Fixiersockel 10, 11 auf die der Deckplatte 5 abgewandte Seite des zweiten Bauteiles 27 und einem entsprechendem Abstand der Anlageseiten 13 zu der von der Deckplatte 4 wegweisenden Stirnseite der Dichtlippe 6 die Dichtlippe 6 verformt ist, so dass eine Abdichtung der Einfügeausnehmung 21 sowie der Durchsteckausnehmung 28 von der der Deckplatte 4 zugewandten Seite des ersten Bauteiles 20 erzielt ist.

## Patentansprüche

1. Drehverschluss zum Verbinden von zwei Bauteilen (20, 27) mit einer Deckplatte (4), mit einem an die Deckplatte (4) angeformten und sich von der Deckplatte (4) weg erstreckenden Fußschaft (5), an den in einem Abstand von der Deckplatte (4) wenigstens zwei einander gegenüberliegende und sich von dem Fußschaft (5) radial nach außen erstreckende starre Fixiersockel (10, 11) angesetzt sind, und mit einer Fixieranordnung zum Fixieren des Drehverschlusses (1) an einem ersten Bauteil (20), wobei die Fixieranordnung wenigstens zwei radial federnde Federschenkel (14, 15) aufweist, die in Umfangsrichtung jeweils zwischen zwei Fixiersockeln (10, 11) angeordnet sowie mit einem Ende mit dem Fußschaft (5) verbunden sind und sich mit dem anderen freien Ende von dem Fußschaft (5) weg in Richtung der Deckplatte (4) erstrecken, **dadurch gekennzeichnet, dass** die Federschenkel (14, 15) so angeordnet sind, dass sie in einer Vorfixieranordnung eine in einem ersten Bauteil (20) ausgebildete Einfügeausnehmung (21) hintergreifen, dass die Fixiersockel (10, 11) jeweils eine in einer Drehrichtung vorderseitig liegende Anfahrschräge (12) aufweisen und dass an der dem Fußschaft (5) zugewandten Seite der Deckplatte (4) eine umlaufende Dichtlippe (6) aus einem weichelastischen Material angebracht ist, wobei der Abstand von der Deckplatte (4) zugewandten Anlageseiten (13) der Fixiersockel (11, 12) zu der von der Deckplatte (4) wegweisenden Stirnseite der Dichtlippe (6) so eingerichtet ist, dass die Dichtlippe (6) in einer Endfixieranordnung zum Erzielen einer Dichtwirkung verformt ist.

2. Deckplatte nach Anspruch 1, **dadurch gekennzeichnet, dass** die Federschenkel (14, 15) und die Fixiersockel (10, 11) im Bereich des von der Deckplatte (4) entfernt liegenden Fußendes (9) des Fußschaftes (5) mit dem Fußschaft (5) verbunden sind.

3. Drehverschluss nach Anspruch 1 oder Anspruch 2, **dadurch gekennzeichnet, dass** sich die Fixiersockel (10, 11) rechtwinklig von dem Fußschaft (5) weg radial nach außen erstrecken.

4. Vorrichtung nach einem der Ansprüche 1 bis 3, **dadurch gekennzeichnet, dass** jeder Fixiersockel (10, 11) eine parallel zu der Deckplatte (4) ausgerichtete Anlageseite (13) aufweist.

5. Drehverschluss nach einem der Ansprüche 1 bis 4, **dadurch gekennzeichnet, dass** wenigstens ein Federschenkel (14, 15) an einem freien Ende eine radial nach außen vorstehende Sicherungsnase (19) aufweist.

6. Drehverschluss nach einem der Ansprüche 1 bis 5, **dadurch gekennzeichnet, dass** an der Deckplatte (4) auf der dem Fußschaft (5) zugewandten Seite wenigstens ein sich von der Deckplatte (4) axial weg erstreckender Anschlagvorsprung (7, 8) ausgebildet ist.

7. Drehverschluss nach einem der Ansprüche 1 bis 6, **dadurch gekennzeichnet, dass** an der dem Fußschaft (5) abgewandten Seite der Deckplatte (4) eine Werkzeugansatzstruktur (3) ausgebildet ist.

## Claims

1. Turnlock fastener for connecting two components (20, 27), having a cover plate (4), having a bottom pillar (5) which is integrally formed on the cover plate (4), which extends away from the cover plate (4), and to which are attached, at a distance from the cover plate (4), at least two rigid fixing lugs (10, 11) which are situated in opposite positions from one another and which extend outwards radially from the bottom pillar (5), and having a fixing arrangement for fixing the turnlock fastener (1) to a first component (20), the fixing arrangement having at least two resilient arms (14, 15) which are resilient in the radial direction, which are each arranged between two fixing lugs (10, 11) in the circumferential direction and which are connected to the bottom pillar (5) at one end and extend away from the bottom pillar (5) and towards the cover plate (4) at the other, free, end, **characterised in that** the resilient arms (14, 15) are so arranged that, in a preliminary fixing position, they engage at a point back from an insertion recess (21) formed in a first component (20), **in that** the fixing lugs (10, 11) each have a lead-in slope (12) which is situated at the front in one direction of rotation, and **in that** a sealing lip (6) of a highly flexible material which extends round in a loop is mounted on the side of the cover plate (4) adjacent the bottom pillar (5), the distance from the contacting faces (13) of the fixing lugs (11, 12), which contacting faces (13) are adjacent the cover plate (4), to the end-face of the sealing lip (6) which faces away from the cover plate (4) is set in such a way that the sealing lip (6) is deformed, to produce a sealing action, in a final fixing position.

2. Cover plate according to claim 1, **characterised in that** the resilient arms (14, 15) and the fixing lugs (10, 11) are connected to the bottom pillar (5) in the region of the bottom end (9) of the bottom pillar (5), which bottom end (9) is situated at a point remote from the cover plate (4).

3. Turnlock fastener according to claim 1 or claim 2, **characterised in that** the fixing lugs (10, 11) extend outwards radially, away from the bottom pillar (5), at right angles.

4. Device according to one of claims 1 to 3, **characterised in that** each fixing lug (10, 11) has a contacting face (13) aligned parallel to the cover plate (4).

5. Turnlock fastener according to one of claims 1 to 4, **characterised in that** at least one resilient arm (14, 15) has, at a free end, a securing nose (19) which projects outwards radially.

6. Turnlock fastener according to one of claims 1 to 5, **characterised in that** at least one projection (7, 8) forming a stop, which extends away from the cover plate (4) axially, is formed on the cover plate (4) on the side adjacent the bottom pillar (5).

7. Turnlock fastener according to one of claims 1 to 6, **characterised in that** a structure (3) for a tool to engage is formed on the side of the cover plate (4) remote from the bottom pillar (5).

## Revendications

1. Dispositif de fermeture à mouvement tournant pour l'assemblage de deux composants structuraux (20, 27) comprenant une plaque de recouvrement supérieure (4), comprenant une tige formant patte d'ancrage (5) réalisée solidaire par moulage de la plaque de recouvrement supérieure (4) et qui va en s'étendant depuis la plaque de recouvrement supérieure (4), à laquelle sont disposés attenants, à une certaine distance de la plaque de recouvrement supérieure (4), aux moins deux patins rigides d'immobilisation en position (10, 11) diamétralement opposés et qui s'étendent vers l'extérieur dans le plan radial depuis la tige formant patte d'ancrage (5), et comprenant un agencement de maintien en position pour fixer le dispositif de fermeture à mouvement tournant (1) sur un premier composant structural (20), dans lequel l'agencement de maintien en position comporte au moins deux segments élastiques (14, 15) capables de réagir élastiquement dans le plan radial qui, dans la direction périphérique sont respectivement disposés entre deux patins d'immobilisation en position (10, 11) et qui sont également reliés à une extrémité de la tige formant patte d'ancrage (5) et qui s'étendent, au niveau de leur autre extrémité libre depuis la tige formant patte d'ancrage (5) en direction de la plaque de recouvrement supérieure (4), **caractérisé en ce que** les segments élastiques (14, 15) sont disposés de telle façon que, dans un agencement de maintien en position préliminaire, ils viennent cramponner par derrière un évidement d'insertion (21) ménagé dans un premier composant structural (20), **en ce que** les patins d'immobilisation en position (10, 11) comportent respectivement une portion inclinée de poussée en position (12) se situant en face avant dans le sens de la rotation, et **en ce qu'**il est prévu, sur le côté de la plaque de recouvrement supérieure (4) orienté en direction de la tige formant patte d'ancrage (5) une lèvre d'étanchéité périphérique (6) réalisée dans une matière à cédage élastique facile, l'intervalle d'écartement entre les faces d'assise (13), orientées en direction de la plaque de recouvrement supérieure(4), des patins d'immobilisation en position (10, 11) et la face antérieure, allant en s'écartant de la plaque de recouvrement supérieure (4), de la lèvre d'étanchéité (6) étant en l'occurrence étudié de telle façon que la lèvre d'étanchéité (6) est, dans un agencement de maintien en position final, déformée pour réaliser un effet d'étanchéité.

2. Plaque de recouvrement supérieure selon la revendication 1, **caractérisée en ce que** les segments élastiques (14, 15) et les patins d'immobilisation en position (10, 11) sont reliés à la tige formant patte d'ancrage (5) au niveau de la portion d'extrémité (9), éloignée de la plaque de recouvrement supérieure (4), de la tige formant patte d'ancrage (5).

3. Dispositif de fermeture à mouvement tournant selon la revendication 1 ou la revendication 2, **caractérisé en ce que** les patins d'immobilisation en position (10, 11) s'étendent vers l'extérieur dans le plan radial depuis la tige formant patte d'ancrage (5) selon une disposition perpendiculaire.

4. Dispositif selon l'une des revendications 1 à 3, **caractérisé en ce que** chaque patin d'immobilisation en position (10, 11) comporte une face d'appui (13) orientée parallèlement à la plaque de recouvrement supérieure (4).

5. Dispositif de fermeture à mouvement tournant selon l'une des revendications 1 à 4, **caractérisé en ce qu'**au moins un segment élastique (14, 15) est muni, au niveau de son extrémité libre, d'un ergot de retenue (19) faisant saillie vers l'extérieur dans le plan radial.

6. Dispositif de fermeture à mouvement tournant selon l'une des revendications 1 à 5, **caractérisé en ce qu'**il est prévu, sur le côté de la plaque de recouvrement supérieure (4) orienté en direction de la tige formant patte d'ancrage (5), au moins une protubérance de butée (7, 8) s'étendant dans le plan axial depuis la plaque de recouvrement supérieure (4).

7. Dispositif de fermeture à mouvement tournant selon l'une des revendications 1 à 6, **caractérisé en ce qu'**il est prévu, sur le côté de la plaque de recouvrement supérieure (4) orienté à l'opposé de la tige formant patte d'ancrage (5), un agencement structural permettant la mise en prise d'un outil (3).
